# EUROPEAN PATENT SPECIFICATION

(11) **EP 2 774 046 B1**
(45) Date of publication and mention of the grant of the patent: **12.10.2016**
(21) Application number: 12846417.9
(22) Date of filing: 01.11.2012
(51) Int. Cl.: G06F 15/16, G06F 3/14, H04L 9/32, H04L 29/08, H04W 12/06, H04W 72/00, H04W 4/00

(54) **SELECTIVE ROAMING LISTS**
SELEKTIVE ROAMINGLISTEN
LISTES D'ITINÉRANCE SÉLECTIVES

(30) Priority: 02.11.2011 US 201113287933
(43) Date of publication of application: 10.09.2014
(73) Proprietor: Microsoft Technology Licensing, LLC, Redmond, WA 98052 (US)
(72) Inventor: TING, Harrison, Mackenzie, Redmond, WA 98052-6399 (US); DESTREBECQ, Olivier, Redmond, WA 98052-6399 (US); VON HADEN, Kyle, Matthew, Redmond, WA 98052-6399 (US); LEE, Sang Ju, Redmond, WA 98052-6399 (US); YANG, Chenguang, Redmond, WA 98052-6399 (US); GORISCHEK, Alexander, Marx, Redmond, WA 98052-6399 (US)
(74) Representative: Grünecker Patent- und Rechtsanwälte PartG mbB
(86) International application number: PCT/US2012/062893
(87) International publication number: WO 2013/067075

(56) References cited:
- US-A1- 2003 088 570
- US-A1- 2005 192 966
- US-A1- 2006 256 751
- PARK, J. ET AL.: 'ADDC: Active display device change in ubiquitous computing environments' 2006 KOREA INFORMATION SCIENCE SOCIETY FALL CONFERENCE vol. 33, no. 2(D), pages 140 - 145, XP055152782
- SCHILIT, B.N. ET AL.: 'Device ensembles [Ubiquitous computing]' COMPUTER vol. 37, no. 12, December 2004, pages 56 - 64, XP011124583

## Description

### BACKGROUND

Computer users are increasingly becoming users of multiple computing devices. In common environments, a user may perform tasks through a work computer, a smartphone, a home computer, a tablet computer, etc. Synchronizing the user's data and experiences among these various devices can be beneficial but challenging. For example, the user may wish to synchronize his or her contacts and calendar across all of the devices, but such devices do not necessarily cooperate, may have accessibility to different combinations of data, and may represent such data in different formats, in different organization structures, etc. Furthermore, synchronization actions can be made more difficult by the segmentation of data among different organizations, user interface constraints, communication constraints, user identities, etc. For example, data available via one device to a user who is authenticated according to one identity may not be available to the same user via a different device or when the user is authenticated as a different identity.

US 2005/192966 A1 relates to an access server allowing secure access to commonly used files stored on multiple file sources from a variety of client devices. The access server extracts a list of file sources associated with the user, and accesses each of those sources. The server is then configured to extract a list of most recently used files by the current user as well as information associated with those files. The access server also processes electronic mail attachments. The access server intercepts electronic mail messages containing attachments, and transmits the attachments to a file server.

US 2003/088570 A1 relates to a networked or non-networked multi-user document device provided with a device portal and/or a personal portal. The device portal and/or the personal portal combine the functionality of an interface of the multi-user document device with access to information and/or resources that may be utilized with or may utilize the functionality or operating capabilities of the multi-user document device. The device portal and the personal portal expand the usefulness of the interface of the multi-user document device and the personal portal customizes or personalizes the interface for an identified user of the multi-user document device. The device portal and/or the personal portal enable various e-commerce capabilities for multi-user document devices.

### SUMMARY

It is the object of the present invention to provide a method and system for synchronizing list data across multiple devices.

This object is solved by the subject matter of the independent claims. Preferred embodiments of the present invention are defined by the dependent claims.

Implementations described and claimed herein address the foregoing problems by synchronizing list data across multiple devices via a centralized or distributed synchronization system while selectively rendering the synchronized list data for use depending on the identity of the entity (e.g., a user, an organization, a system, a device) accessing the list data and the limitations of the device used to access the list data. The selective rendering may also depend on the service or application through which the resource referenced by each list item can be accessed. Further, when uploading list data to a synchronization system, the list data is pre-filtered according to the storage location of each resource referenced by a list item and/or the service through which each resource referenced by a list item is accessible

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Other implementations are also described and recited herein.

### BRIEF DESCRIPTIONS OF THE DRAWINGS

FIG. 1 illustrates an example synchronization environment providing selectively roaming lists.
FIG. 2 illustrates an example synchronization environment providing selectively roaming lists and showing partial screenshots of example lists.
FIG. 3 illustrates example operations performed by a presentation device and a synchronization system providing selectively roaming list data.
FIG. 4 illustrates example operations pre-filtering list data according to the storage location of a resource referenced by a list item.
FIG. 5 illustrates an example system that may be useful in implementing the technology described herein.

### DETAILED DESCRIPTIONS

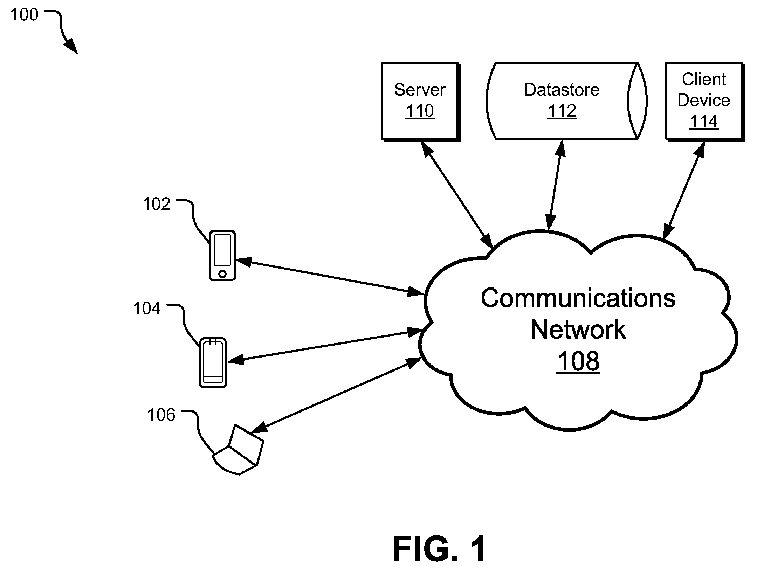

FIG. 1 illustrates an example synchronization environment 100 providing selective roaming lists. Client devices, such as a mobile computing device 102, smartphone 104, and computer 106, represent examples of devices ("presentation devices") used to present list data to a user. A presentation device is capable of receiving list data from a datastore or service, whether local or remote, and presenting it to a user or another device. In the case of the client devices shown, the list data may be presented to a user via a display interface, for example. In some scenarios, the list data represents certain system settings, such as a most recently used list of resources, which can be presented to the user via a user interface to enhance the user experience.

Each client device 102, 104 and 106 is communicatively coupled to a communications network 108, such as via an Ethernet connection, a Wi-Fi connection, a Bluetooth connection, etc., which in turn is communicatively coupled to one or more servers 110, one or more datastores 112, and one or more other client devices 114. This communicating combination of systems allows computing capabilities to be provided as a service via the communications network 108, where different entities and identities can share network-attached resources, including computing services, data storage, communication channels, etc. In one implementation, at least one of the identities represents a cross-device identity that allows an authentication system to identify, authenticate, and grant the user with access to resources via multiple presentation devices (e.g., a user's work computer, a user's smartphone, a user's home computer).

List data can be used to manage wide variety of data, often as application or system settings. In various implementations, a list of recently accessed files, folders, services, network storage locations, network connections, a financial accounts, web sites, etc. may be maintained in lists and presented to the user for quick access. For example, a word processing application on a desktop computer may present a list of most recently edited word processing files from which the user can conveniently select a file of recent interest to open and continue editing. In another example, a list may present a selection of financial accounts (e.g., credit card accounts) that the user may use to execute an online purchase. Other types of list data are also contemplated.

In one implementation, a single entity (e.g., a user) may use all three of the client devices 102, 104, and 106 at various times to access assorted resources through the communications network 108. Such users can benefit from having access to shared settings that are associated with their identities regardless of the presentation device used to access the communications network 108. The availability of shared settings across multiple devices is considered a form of "roaming" For example, via the computer 106, a user may access a corporate network using a corporate identity, which is associated with credentials designated for accessing certain corporate resources. At other times, the user may access a home network using a personal identity via the smartphone 104. Further, the user can also be logged into both the home network and the corporate network at the same type using the appropriate identity. Depending on the identity used to access certain resources and on the presentation device through which the access is attempted, the user may have different resources available. As such, list data that references such resources, such as a most recently used list, can be selectively rendered to present the list items appropriate for the user's identity, presentation device, and other context factors.

In one scenario, for example, a user may have access to list data referencing through out the user's environment (e.g., resources on a corporate network, resources on a home network, resources accessible through a data or computation service). Without some level of intelligent processing, the user may be presented with synchronized list data referencing all such resources, regardless of whether each resource is actually available to the user in his or her current identity, through a specific presentation device, etc. Accordingly, the user may select the list item to access the referenced resource only to find that he or she is unable to access the resource. In contrast, the list data may be selectively rendered to present only those resources accessible to the user in the present context (e.g., by an authenticated identity, through a specific presentation device, etc.). For example, in the context of a most recently used list, a user's smartphone may not be capable of opening a file associate with a complex, desktop-only software package. Accordingly, in one implementation, the list data presented to the user through the smartphone 104 may selectively render only those list items that are compatible with the smartphone 104. Other constraints, as described below, may also influence which list items are rendered in a list and which list items are not.

In one perspective, if the user is logged into his or her home network using a personal identity but not into his or her corporate network using a corporate identity, the user will likely not have access to certain corporate resources. Accordingly, such corporate resources should not be presented in a list of available resources (e.g., a recent documents list) to the user when the user is logged in only using a personal identity. In another perspective, if the user is accessing the corporate network via the smartphone 104, he or she will likely not have access to certain resources that require a desktop or laptop-based software application to access such resources. For example, the user may not have access to a desktop-based video editing software package required to view and edit certain video files. Accordingly, such video files should not show up on a list of available resources to the user when the user is logged in to the corporate network via the smartphone 104.

In summary, list data of an entity can be synchronized across multiple devices and selectively rendered to the entity's device depending on the identity under which the entity is authenticated and the presentation device through which the entity is interacting with available resources. For example, a user can see different recent document lists on different devices and when logged in as different entities so that the user's lists do not include resources he or she cannot really access or effectively use. In this manner, the client's list data is customized based on one or more factors in the user's context.

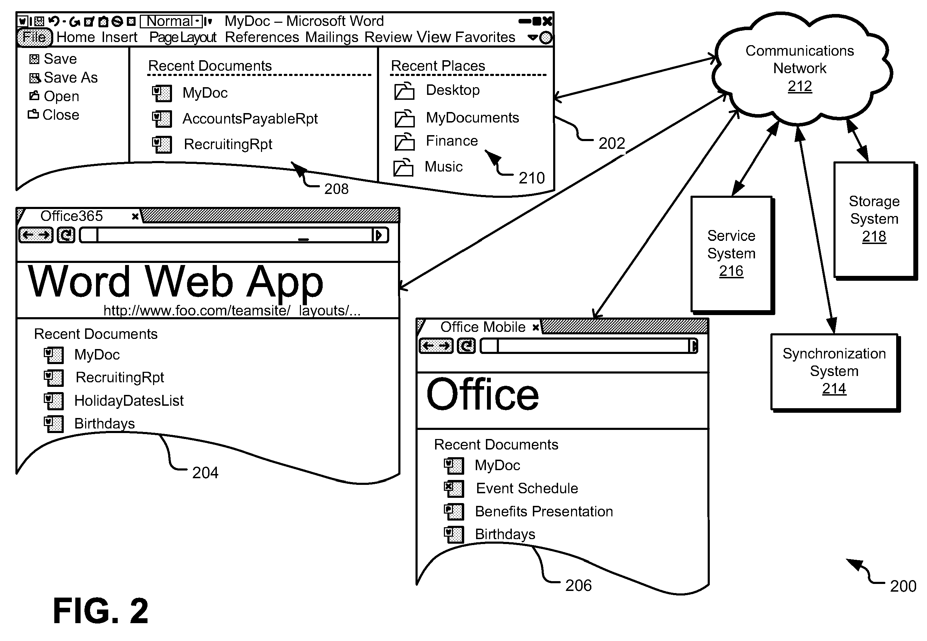

FIG. 2 illustrates an example synchronization environment 200 providing selective roaming lists and showing partial screenshots 202, 204, and 206 of example lists. The screenshot 202 depicts a list 208 of recently used documents and a list 210 of recently visited "places" (e.g., local or remote) storage locations. The lists 208 and 210 are examples of list data that are synchronized via a communications network 212 and a synchronization system 214. For example, when the user accesses a document "MyDoc" over the communications network 212, a list item corresponding to the "MyDoc" resource is added to a list that is periodically synchronized by the synchronization system 214 with a shared cross-device, cross-identity list. Accordingly, when the user accesses resources in the communications network 212 through another application, such as the word processing web app depicted in screenshot 204 or the mobile office application depicted in the screenshot 206, the list data is synchronized to the presentation device displaying the respective screenshots and presented to the user. In another implementation, the list items can be presented in different combinations, orders, formats, etc. based on a variety of contextual factors, including without limitation the identity of the user, a level of authentication achieved by the user, the application that is presenting the list data, etc.

As previously described, the list data may include a variety of information. For example, the list data may include services accessible through the communication network 212, such as services provided by service system 216. Alternatively, the list data may include datafiles or data locations, such as files and folders accessible through the storage system 218. However, depending on the identity and/or the presentation device used to access such network resources, one or more resources may not be accessible to the user, even though they were available to the user previously via a different identity or device. Accordingly, the lists shown in the screenshots 202, 204, and 206 differ from each other, omitting list items that reference resources not available through the specific presentation device or to the specific identity used to access the communications network 212. Likewise, the lists may differ because they include list items that reference resources not available to other presentation devices or identities but that are available to the specific presentation device and identity associated with a particular screenshot. In addition, the lists may differ because each list can include a mix of list items that are stored locally on the device and list items that are roamed via the communications network.

Accordingly, the list data is synchronized among all of the identities and presentation devices used by the user, but the list items rendered to the user are filtered to include only those list items referencing resources available to the identity and presentation of device to access the communication network 212. For example, the identity used to access the corporate team site via the web app shown in the screenshot 204 does not have access to sensitive financial documents, such as the AccountsPayableRpt document but does have access to the "MyDoc," "RecruitingRpt," "HolidayDatesList," and "Birthdays". In contrast, the mobile application shown in the screenshot 206 has access to a different set of resources, and therefore the list depicted in the screenshot 206 presents a different set of list items. The selective rendering of list items can depend on a variety of contextual parameters including without limitation the specific presentation device, the type of presentation device (e.g., desktop computer, smartphone, etc.), the identity used to access the resources, the type of access to the network (e.g., within the same subnet, via a virtual private network connection (VPN)), and level of authentication achieved by the user, etc. Selective rendering of list data presents a user with list items that are actually accessible based on the user's context and, for example, does not present the user with list items that reference resources that are unavailable to the user based on this context.

In addition to the list item labels and resource references, each list item may be associated with other parameters. Example parameters may include without limitation a pin status indicating whether a list item is pinned to the associated list, a timestamp, a storage location qualifier (e.g., whether the corresponding resources is stored locally or remotely), alternative groups of list items, a friendly title/path associated with the resource, an associated application used to access the resource, share status, etc.

In an alternative implementation, the list data can be allocated to application-specific lists. For example, a word processing application and a spreadsheet application may maintain their own lists of recent documents. Accordingly, the list data can be selectively rendered according to the application used to access the listed documents.

It should be understood that the described technology relate to the synchronization of data across different devices, identities, and applications within an entity's computing ecosystem. In one implementation, list data, such as settings, recently access documents, recently used financial accounts, and other data that references computing, financial, and/or communication resources, are selective rendered to a presentation device of the entity depending on one or more contextual factors that inform whether a list item should be presented to the entity in a particular context.

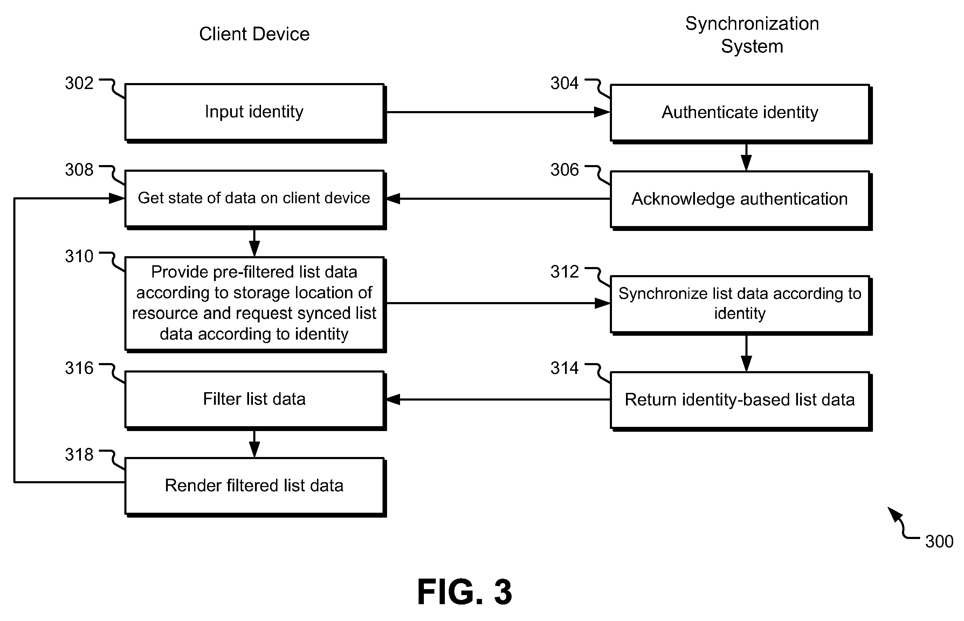

FIG. 3 illustrates example operations 300 performed by a presentation device and a synchronization system providing selectively roaming list data. The operations on the left of FIG. 3 represent operations performed by a client device (e.g., a presentation device) and the operations on the right of FIG. 3 represent operations formed by a synchronization system (e.g., system providing a "cloud-based" synchronization service).

An identity operation 302 receives the credentials of a user and transmits the credentials to the synchronization system. For example, the user may enter a username and password corresponding to the user's corporate identity, and the client device submits the username and password to authentication systems coupled to a communications network. One such authentication system may be associated with the synchronization system, authenticating the user's identity in an authenticating operation 304 before granting the user with access to list data and resources associated with the identity. If the user is authenticated, the synchronization system acknowledges authentication in an acknowledgment operation 306.

It should be understood that authentication system and synchronization system may be a singular or distributed (e.g., a central authentication and/or synchronization system or multiple, interconnected authentication systems and components). An authentication system may be integral with the synchronization system or distinct from the synchronization system. Further, in one implementation, authentication of a single identity on the client device may result in multiple requests for multiple identities to one or more synchronization systems (e.g., a single login representing multiple identities). Alternatively, authentication of a single identity on a client device may result in a single synchronization request, which is then branched out into multiple requests to the synchronization system.

Responsive to receipt of acknowledgment, an update operation 308 determines the state of data access on the client device and updates an associated list data datastore. For example, the update operation 308 may evaluate its access logs to identify any documents that may have been accessed by the client device since the last signalization event. Alternatively, the list data itself may be kept up-to-date on a continuous or periodic basis, such that the update operation 308 merely reads the up-to-date list data to determine the state of the client device. A synchronization request operation 310 pre-filters the list data associated with such documents based on the storage location (e.g., local, network-accessible, etc.) of each document, providing the pre-filtered list data to the synchronization system and requesting synchronized list data from the signalization system based on the user's authenticated identity.

A synchronization operation 312 synchronizes the list data according to the authenticated identity, and a returning operation 314 returns the identity-based list data to the client device. A filter operation 316 filters the list data based on the presentation device (an potentially other factors), selectively rendering the list data on the presentation device based on the context (e.g., presentation device, identity, application being used, etc.).

In an alternative implementation, all of the list data can be synchronized via the synchronization system and then filtered later (e.g., in the filtering operation 316), rather than pre-filtering in the synchronization request operation 310. In yet another implementation, such filtering operations may be performed independently, such that each filtering operation filters the list data without regard to the filtering performed by any other filtering operation. Such filtering operations may occur simultaneously or at distinct times during the synchronization process. As an example of the flexibility of these approaches, it should be understood that filtering may be accomplished as part of the uploading of list data to the synchronization system, while the list data resides within or is processed by the synchronization system, and/or as part of the downloading of list data to the client device.

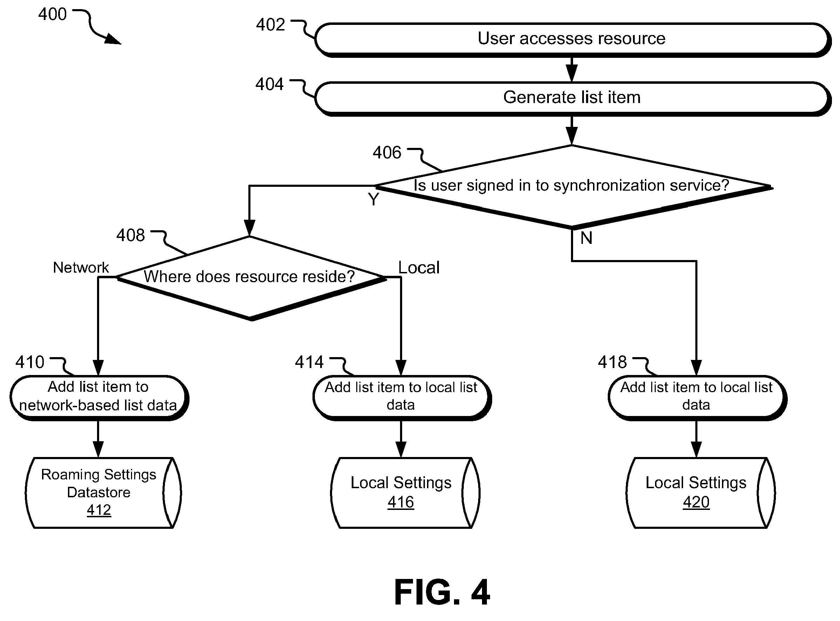

FIG. 4 illustrates example operations 400 pre-filtering list data according to the storage location of a resource referenced by a list item. In an access operation 402, a user accesses a resource. A generating operation 404 generates a list item, for example, referencing the resource, and adds the list item to a local list (e.g., a recent documents list).

A decision operation 406 determines whether the user is signed into a synchronization service. If so, another decision operation 408 determines where the resource referenced by the list item resides (e.g., where a data resource is stored, through which communication interface a service resource is available, etc.). If the decision operation 408 determines that the resource resides locally in a presentation device, this may imply that the user will not have access to the resource via a different presentation device. Accordingly, in addition operation 414 adds the list item to local list in a local settings datastore 416. If the decision operation 408 determines that the resource resides via network-based storage (e.g., within a corporate network, in the "cloud," etc.), another addition operation 410 adds the list item to network-based list data in a roaming settings datastore 412, which is synchronizable via a synchronization system.

If the decision operation 406 determines that the user is not signed into a synchronization system, yet another addition operation 418 adds the list item to a local setting datastore 420. List data may be further partitioned into per-application lists or other lists specific to other contextual factors. It should be understood that the datastores 414, 416, and 420 may represent any combination of storage devices and/or logical partitions of stored data (e.g., different sections of a registry or directory service).

As a result of the operation 400, the list items are allocated to different lists depending on the location of the resource being accessed. In this way, the list items in the roaming settings datastore 412 are synchronized via the synchronization system so that the user can potentially have those list items available in selectively rendered lists when using other presentation devices and other identities. In contrast, resources local to the presentation device will not be available when the user is on a different presentation device and further, resources access when the user is not signed into a synchronization service will not be subject to synchronization with other devices and identities. It should be understood, however, that a user may be allowed to toggle this feature such that the user can see list items for resources that are unavailable to the user in the present context, perhaps with augmentation (e.g., an annotation, a greyed effect, etc.) that indicates the resource is not available.

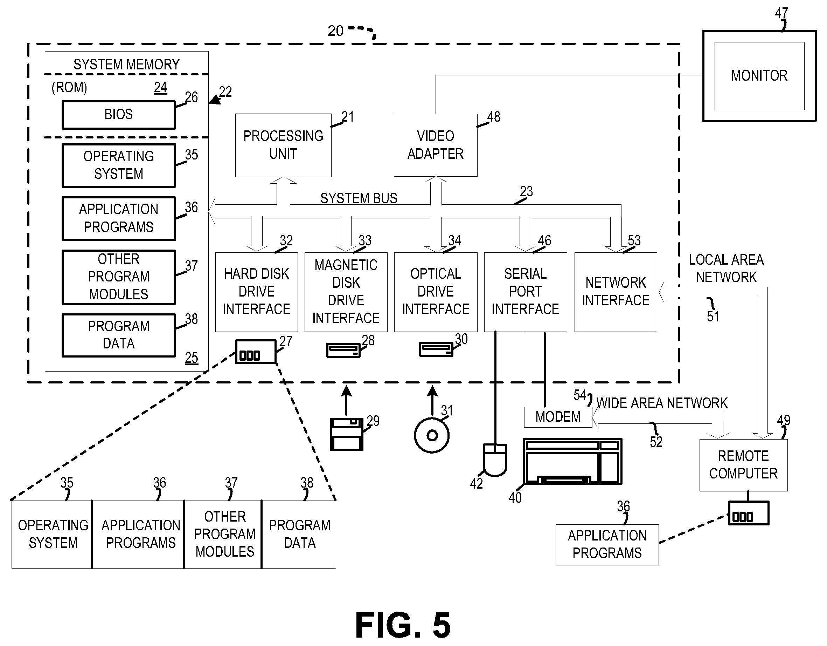

FIG. 5 illustrates an example system that may be useful in implementing the technology described herein. FIG. 5 illustrates an example system that may be useful in implementing the described technology. The example hardware and operating environment of FIG. 5 for implementing the described technology includes a computing device, such as general purpose computing device in the form of a gaming console or computer 20, a mobile telephone, a personal data assistant (PDA), a set top box, or other type of computing device. In the implementation of FIG. 5, for example, the computer 20 includes a processing unit 21, a system memory 22, and a system bus 23 that operatively couples various system components including the system memory to the processing unit 21. There may be only one or there may be more than one processing unit 21, such that the processor of computer 20 comprises a single central-processing unit (CPU), or a plurality of processing units, commonly referred to as a parallel processing environment. The computer 20 may be a conventional computer, a distributed computer, or any other type of computer; the invention is not so limited.

The system bus 23 may be any of several types of bus structures including a memory bus or memory controller, a peripheral bus, a switched fabric, point-to-point connections, and a local bus using any of a variety of bus architectures. The system memory may also be referred to as simply the memory, and includes read only memory (ROM) 24 and random access memory (RAM) 25. A basic input/output system (BIOS) 26, containing the basic routines that help to transfer information between elements within the computer 20, such as during start-up, is stored in ROM 24. The computer 20 further includes a hard disk drive 27 for reading from and writing to a hard disk, not shown, a magnetic disk drive 28 for reading from or writing to a removable magnetic disk 29, and an optical disk drive 30 for reading from or writing to a removable optical disk 31 such as a CD ROM, DVD, or other optical media.

The hard disk drive 27, magnetic disk drive 28, and optical disk drive 30 are connected to the system bus 23 by a hard disk drive interface 32, a magnetic disk drive interface 33, and an optical disk drive interface 34, respectively. The drives and their associated storage media provide nonvolatile storage of computer-readable instructions, data structures, program engines, and other data for the computer 20. It should be appreciated by those skilled in the art that any type of computer-readable storage media which can store data that is accessible by a computer, such as magnetic cassettes, flash memory cards, digital video disks, random access memories (RAMs), read only memories (ROMs), and the like, may be used in the example operating environment.

A number of program engines may be stored on the hard disk, magnetic disk 29, optical disk 31, ROM 24, or RAM 25, including an operating system 35, one or more application programs 36, other program engines 37, and program data 38. A user may enter commands and information into the personal computer 20 through input devices such as a keyboard 40 and pointing device 42. Other input devices (not shown) may include a microphone, joystick, game pad, satellite dish, scanner, or the like. These and other input devices are often connected to the processing unit 21 through a serial port interface 46 that is coupled to the system bus, but may be connected by other interfaces, such as a parallel port, game port, or a universal serial bus (USB). A monitor 47 or other type of display device is also connected to the system bus 23 via an interface, such as a video adapter 48. In addition to the monitor, computers typically include other peripheral output devices (not shown), such as speakers and printers.

The computer 20 may operate in a networked environment using logical connections to one or more remote computers, such as remote computer 49. These logical connections are achieved by a communication device coupled to or a part of the computer 20; the invention is not limited to a particular type of communications device. The remote computer 49 may be another computer, a server, a router, a network PC, a client, a peer device or other common network node, and typically includes many or all of the elements described above relative to the computer 20, although only a memory storage device 50 has been illustrated in FIG. 4. The logical connections depicted in FIG. 4 include a local-area network (LAN) 51 and a wide-area network (WAN) 52. Such networking environments are commonplace in office networks, enterprise-wide computer networks, intranets and the Internet, which are all types of networks.

When used in a LAN-networking environment, the computer 20 is connected to the local network 51 through a network interface or adapter 53, which is one type of communications device. When used in a WAN-networking environment, the computer 20 typically includes a modem 54, a network adapter, a type of communications device, or any other type of communications device for establishing communications over the wide area network 52. The modem 54, which may be internal or external, is connected to the system bus 23 via the serial port interface 46. In a networked environment, program engines depicted relative to the personal computer 20, or portions thereof, may be stored in the remote memory storage device. It is appreciated that the network connections shown are example and other means of and communications devices for establishing a communications link between the computers may be used.

In an example implementation, a synchronization service, a list data storage operator, selective rendering engines, filtering modules, and other operators and services may be embodied by instructions stored in memory 22 and/or storage devices 29 or 31 and processed by the processing unit 21. List data, credentials, and other data may be stored in memory 22 and/or storage devices 29 or 31 as persistent datastores. Further, services, such as synchronization service, represent hardware and/or software configured to provide service functionality for network-connected systems. Such services may be implemented using a general-purpose computer and specialized software (such as a server executing service software), a special purpose computing system and specialized software (such as a mobile device or network appliance executing service software), or other computing configurations.

The embodiments of the invention described herein are implemented as logical steps in one or more computer systems. The logical operations of the present invention are implemented (1) as a sequence of processor-implemented steps executing in one or more computer systems and (2) as interconnected machine or circuit engines within one or more computer systems. The implementation is a matter of choice, dependent on the performance requirements of the computer system implementing the invention. Accordingly, the logical operations making up the embodiments of the invention described herein are referred to variously as operations, steps, objects, or engines. Furthermore, it should be understood that logical operations may be performed in any order, unless explicitly claimed otherwise or a specific order is inherently necessitated by the claim language.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method at a presentation device (102, 104, 106) of a user, comprising:
receiving (314), from a synchronization system (214), list data associated with an authenticated identity of the user, each list item of the list data identifying a resource previously accessed by the user;
selectively rendering the list data on the presentation device, the list items rendered in the list data being selected based on the authenticated identity and the presentation device; and
selectively transferring (310) new list data to the synchronization system, the new list data being pre-filtered according to a storage location of each resource referenced by a list item, wherein the pre-filtering further comprises:
upon access to a resource by the user, generating (404) a list item;
if (406) the user is authenticated at the synchronization system, determining where the resource referenced by the list item is stored; and
if it is determined that the resource is stored locally in the presentation device, adding the list item to a local list;
otherwise, if it is determined that the resource is stored in a network-based storage, adding the list item to a network-based list in a roaming settings datastore (412) which is synchronizable via the synchronization system.

2. The method of claim 1 wherein the list data is associated with a specific application and the list items rendered in the list data are limited to those resources that can be accessed through the specific application.

3. The method of claim 1 wherein the list data includes most-recently-used list items.

4. The method of claim 1 wherein the selectively rendering comprises:
selectively rendering the list data on the presentation device, wherein the list items rendered in the list data are further selected based on an availability of the resource for the authenticated identity of the user and/or for the presentation device.

5. The method of claim 1 further comprising:
selectively transferring from the presentation device new list data, the new list data being further pre-filtered according to a service through which each resource referenced by a list item is accessible.

6. A presentation device (102, 104, 106) comprising:
a communication interface configured to receive, from a synchronization system (214), list data associated with an authenticated identity of a user of the presentation device, each list item of the list data identifying a resource previously accessed by the user; and
a rendering engine configured to selectively render the list data on the presentation device, the list items rendered in the list data being selected based on the authenticated identity and the presentation device,
wherein the communication interface is further configured to selectively transfer from the presentation device new list data to the synchronization system, the new list data being pre-filtered according to a storage location of each resource referenced by a list item, wherein the pre-filtering comprises:
upon access to a resource by the user, generate, by the presentation device, (404) a list item;
if the user is authenticated at the synchronization system, determine, by the presentation device, where the resource referenced by the list item is stored; and
if it is determined that the resource is stored locally in the presentation device, add, by the presentation device, the list item to a local list;
otherwise, if it is determined that the resource is stored in a network-based storage, add, by the presentation device, the list item to a network-based list in a roaming settings datastore (412) which is synchronizable via the synchronization system.

7. The presentation device of claim 6 wherein the communication interface is further configured to selectively transfer from the presentation device new list data, the new list data being further pre-filtered according to a service through which each resource referenced by a list item is accessible.

8. One or more computer-readable storage media encoding computer-executable instructions that, when carried out by a processor, cause the processor to perform the method of one of the claims 1 to 5.

## Patentansprüche

1. Verfahren an einer Präsentationsvorrichtung (102, 104, 106) eines Anwenders mit:
Empfangen (314) von einem Synchronisationssystem (214) mit einer authentifizierten Identität des Anwenders verbundene Listendaten, wobei jeder Listenpunkt der Listendaten eine Ressource kennzeichnet, auf die der Anwender zuvor zugegriffen hat;
selektives Wiedergeben der Listendaten an der Präsentationsvorrichtung, wobei die in den Listendaten wiedergegebenen Listenpunkte auf der Basis der authentifizierten Identität und der Präsentationsvorrichtung ausgewählt werden; und
selektives Übertragen (310) neuer Listendaten zum Synchronisationssystem, wobei die neuen Listendaten entsprechend einem Speicherort von jeder Ressource vorgefiltert werden, auf die durch einen Listenpunkt Bezug genommen wird,
wobei das Vorfiltern des Weiteren umfasst:
beim Zugriff auf eine Ressource durch den Anwender, Erzeugen (404) eines Listenpunktes;
wenn (406) der Anwender am Synchronisationssystem authentifiziert wird, Bestimmen, wo die auf den Listenpunkt bezogene Ressource gespeichert ist; und
wenn bestimmt wird, dass die Ressource örtlich in der Präsentationsvorrichtung gespeichert ist, Hinzufügen des Listenpunktes zu einer örtlichen Liste;
wenn andererseits bestimmt wird, dass die Ressource in einem netzwerkbasierten Speicher gespeichert ist, Hinzufügen des Listenpunktes in eine netzwerkbasierte Liste in einem Datenspeicher für Roaming-Einstellungen (412), der über das Synchronisationssystem synchronisierbar ist.

2. Verfahren nach Anspruch 1, wobei die Listendaten mit einer speziellen Anwendung verbunden sind und die in den Listendaten wiedergegebenen Listenpunkte auf jene Ressourcen begrenzt sind, auf die durch die spezielle Anwendung zugegriffen werden kann.

3. Verfahren nach Anspruch 1, wobei die Listendaten zuletzt verwendete Listenpunkte aufweisen.

4. Verfahren nach Anspruch 1, wobei das selektive Wiedergeben umfasst:
selektives Wiedergeben der Listendaten an der Präsentationsvorrichtung, wobei die in den Listendaten wiedergegebenen Listenpunkte des Weiteren auf der Basis einer Verfügbarkeit der Ressource für eine authentifizierte Identität des Anwenders und/oder für die Präsentationsvorrichtung ausgewählt werden.

5. Verfahren nach Anspruch 1, des Weiteren mit:
selektivem Übertragen von der Präsentationsvorrichtung neuer Listendaten, wobei die neuen Listendaten des Weiteren entsprechend einem Service vorgefiltert werden, durch den jede auf einen Listenpunkt bezogene Ressource zugänglich ist.

6. Präsentationsvorrichtung (102, 104, 106) mit:
einer Kommunikationsschnittstelle, die konfiguriert ist, um von einem Synchronisationssystem (214) Listendaten zu empfangen, die mit einer authentifizierten Identität eines Anwenders der Präsentationsvorrichtung verbunden sind, wobei jeder Listenpunkt der Listendaten eine Ressource kennzeichnet, auf die der Anwender zuvor zugegriffen hat; und
einem Wiedergabegerät, das konfiguriert ist, um die Listendaten an der Präsentationsvorrichtung selektiv wiederzugeben, wobei die in den Listendaten wiedergegebenen Listenpunkte auf der Basis der authentifizierten Identität und der Präsentationsvorrichtung ausgewählt werden,
wobei die Kommunikationsschnittstelle des Weiteren konfiguriert ist, um von der Präsentationsvorrichtung selektiv neue Listendaten zum Synchronisationssystem zu übertragen, wobei die neuen Listendaten entsprechend einem Speicherort von jeder auf einen Listenpunkt bezogenen Ressource vorgefiltert werden,
wobei das Vorfiltern umfasst:
beim Zugriff auf eine Ressource durch den Anwender, Erzeugen (404) eines Listenpunktes durch die Präsentationsvorrichtung;
wenn der Anwender am Synchronisationssystem authentifiziert wird, Bestimmen durch die Präsentationsvorrichtung, wo die auf den Listenpunkt bezogene Ressource gespeichert ist; und
wenn bestimmt wird, dass die Ressource örtlich in der Präsentationsvorrichtung gespeichert ist, Hinzufügen des Listenpunktes zu einer örtlichen Liste durch die Präsentationsvorrichtung;
wenn andererseits bestimmt wird, dass die Ressource in einem netzwerkbasierten Speicher gespeichert ist, Hinzufügen durch die Präsentationsvorrichtung des Listenpunktes zu einer netzwerkbasierten Liste in einem Datenspeicher für Roaming-Einstellungen (412), der über das Synchronisationssystem synchronisierbar ist.

7. Präsentationsvorrichtung nach Anspruch 6, wobei die Kommunikationsschnittstelle des Weiteren konfiguriert ist, um von der Präsentationsvorrichtung neue Listendaten selektiv zu übertragen, wobei die neuen Listendaten des Weiteren entsprechend einem Service vorgefiltert werden, durch den jede auf einen Listenpunkt bezogene Ressource zugänglich ist.

8. Eine oder mehrere computerausführbare Anweisungen zum Codieren von computerlesbaren Speichermedien, die, wenn sie von einem Prozessor ausgeführt werden, den Prozessor veranlassen, das Verfahren nach einem der Ansprüche 1 bis 5 durchzuführen.

## Revendications

1. Procédé sur un dispositif de présentation (102, 104, 106) d'un utilisateur, comprenant :
la réception (314), en provenance d'un système de synchronisation (214), de données de liste associées à une identité authentifiée de l'utilisateur, chaque élément de liste des données de liste identifiant une ressource à laquelle l'utilisateur a accédé précédemment ;
le rendu sélectif des données de liste sur le dispositif de présentation, les éléments de liste rendus dans les données de liste étant sélectionnés sur base de l'identité authentifiée et du dispositif de présentation ; et
le transfert sélectif (310) de nouvelles données de liste au système de synchronisation, les nouvelles données de liste étant préfiltrées en fonction d'un emplacement de stockage de chaque ressource référencée par un élément de liste, dans lequel le préfiltrage comprend en outre :
lors de l'accès à une ressource par l'utilisateur, la génération (404) d'un élément de liste ;
si (406) l'utilisateur est authentifié sur le système de synchronisation, la détermination de l'endroit où la ressource référencée par l'élément de liste est stockée ; et
s'il est déterminé que la ressource est stockée localement dans le dispositif de présentation, l'ajout de l'élément de liste à une liste locale ;
autrement, s'il est déterminé que la ressource est stockée dans un stockage sur base réseau, l'ajout de l'élément de liste à une liste sur base réseau dans un magasin de données de réglages d'itinérance (412) qui est synchronisable via le système de synchronisation.

2. Procédé selon la revendication 1, dans lequel les données de liste sont associées à une application spécifique et les éléments de liste rendus dans les données de liste sont limités aux ressources accessibles via l'application spécifique.

3. Procédé selon la revendication 1, dans lequel les données de liste comprennent des éléments de liste les plus récemment utilisés.

4. Procédé selon la revendication 1, dans lequel le rendu sélectif comprend :
le rendu sélectif des données de liste sur le dispositif de présentation, dans lequel les éléments de liste rendus dans les données de liste sont en outre sélectionnés sur base d'une disponibilité de la ressource pour l'identité de l'utilisateur authentifiée et/ou pour le dispositif de présentation.

5. Procédé selon la revendication 1, comprenant en outre :
le transfert sélectif de nouvelles données de liste depuis le dispositif de présentation, les nouvelles données de liste étant en outre préfiltrées en fonction d'un service via lequel chaque ressource référencée par un élément de liste est accessible.

6. Dispositif de présentation (102, 104, 106) comprenant :
une interface de communication configurée pour recevoir, en provenance d'un système de synchronisation (214), des données de liste associées à une identité authentifiée d'un utilisateur du dispositif de présentation, chaque élément de liste des données de liste identifiant une ressource à laquelle l'utilisateur a accédé précédemment ; et
un moteur de rendu configuré pour rendre sélectivement les données de liste sur le dispositif de présentation, les éléments de liste rendus dans les données de liste étant sélectionnés sur base de l'identité authentifiée et du dispositif de présentation,
dans lequel l'interface de communication est en outre configurée pour transférer sélectivement de nouvelles données de liste du dispositif de présentation au système de synchronisation, les nouvelles données de liste étant préfiltrées en fonction d'un emplacement de stockage de chaque ressource référencée par un élément de liste, dans lequel le préfiltrage comprend :
lors de l'accès à une ressource par l'utilisateur, la génération (404), par le dispositif de présentation, d'un élément de liste ;
si l'utilisateur est authentifié sur le système de synchronisation, la détermination, par le dispositif de présentation, de l'endroit où la ressource référencée par l'élément de liste est stockée ; et
s'il est déterminé que la ressource est stockée localement dans le dispositif de présentation, l'ajout, par le dispositif de présentation, de l'élément de liste à une liste locale ;
autrement, s'il est déterminé que la ressource est stockée dans un stockage sur base réseau, l'ajout, par le dispositif de présentation, de l'élément de liste à une liste sur base réseau dans un magasin de données de réglages d'itinérance (412) qui est synchronisable via le système de synchronisation.

7. Dispositif de présentation selon la revendication 6, dans lequel l'interface de communication est en outre configurée pour transférer sélectivement, depuis le dispositif de présentation, de nouvelles données de liste, les nouvelles données de liste étant en outre préfiltrées en fonction d'un service via lequel chaque ressource référencée par un élément de liste est accessible.

8. Un ou plusieurs supports de stockage lisibles par un ordinateur sur lesquels sont codées des instructions exécutables par un ordinateur qui, lorsqu'elles sont implémentées par un processeur, commandent au processeur de mettre en oeuvre le procédé selon l'une des revendications 1 à 5.
